# EUROPEAN PATENT APPLICATION

(11) **EP 4 365 842 A1**
(43) Date of publication of application: **08.05.2024**
(21) Application number: 22205121.1
(22) Date of filing: 02.11.2022
(51) Int. Cl.: G06T 7/73

(54) **CALIBRATION OF A CAMERA COORDINATE SYSTEM**

(71) Applicant: Smart Eye AB, 413 27 Göteborg (SE)
(72) Inventor: WITT, Fernando, 413 27 Göteborg (SE); LINDE, Joacim, 413 27 Göteborg (SE)
(74) Representative: Lind Edlund Kenamets Intellectual Property AB

(57) **Abstract**

A method and system for calibrating a coordinate transform, CT, between a reference coordinate system and a camera coordinate system wherein the reference coordinate system relates to a vehicle interior in which the camera is mounted. The method comprises obtaining a 3D model of the vehicle interior, the 3D model including at least one physical structure which is identifiable in the image, acquiring an image of the vehicle interior using the camera, identifying at least one feature in the image corresponding to one of the physical structures, and selecting a set of pixel coordinates of the feature, each pixel coordinate associated with a specific point in the 3D model, forming 2D projections of the specific points onto the camera image plane by applying the coordinate transform and a model of camera optics, and calibrating the CT based on a relationship between the set of selected pixel coordinates and the 2D projections.

## Description

### Field of the invention

The present invention relates to calibration of a local coordinate system of a camera mounted in a vehicle interior.

### Background of the invention

In vehicle imaging applications, such as driver monitoring systems (DMS), a camera is mounted in the vehicle interior. The exact position of the camera is not necessarily fixed and known. For example, if the camera is mounted on the steering wheel column, it will regularly be moved in at least two degrees of freedom (axial and elevation). If it is mounted on the rear-view mirror, it will move every time the mirror is adjusted. And even for a stationary location, such as on the dashboard, the camera may be unintentionally dislocated.

For this reason, it is important to regularly update or calibrate the camera position and orientation (i.e. the local coordinate system of the camera) with respect to a known reference coordinate system (i.e. the coordinate system of the vehicle interior). The local coordinate system of the camera is often referred to as the camera coordinate system, CCS. Calibration of the CCS is fundamental for the correct function of features like head tracking, eye tracking and viewing targets.

Existing solutions are designed to track a feature on the image using template matching. Using as input the 2D displacement of the tracked feature, a linear interpolation of the CCS, for the four extremes of the steering column, is performed. The interpolation result is considered as the calibrated CCS. Unfortunately, it is difficult, sometimes impossible, to find suitable features in the car interior. Therefore, the approach requires extensive experience and manual work in order to configure the system, e.g. find appropriate features/templates. In addition, a satisfactory configuration is often application specific, and may not work for a different interior. Even for a carefully designed configuration, template matching is not very robust, leading to false detections e.g. on backside of steering wheel. Intricate control logic and filtering is required to increase robustness, which in turn increases complexity and cost.

Further, in conventional systems, camera calibration is typically limited to two degrees of freedom, e.g. position in/out and pitch up/down. As mentioned, calibration is often required in more complex situations, and in more degrees of freedom.

### General disclosure of the invention

It is an object with the present invention to mitigate the above problems, and to provide more computationally effective calibration of the CCS.

According to a first aspect of the present invention, this and other objects are achieved by a method for calibrating a coordinate transform, CT, between a reference coordinate system and a camera coordinate system wherein the reference coordinate system relates to a vehicle interior in which the camera is mounted. The method comprises obtaining a 3D model of the vehicle interior, the 3D model including at least one physical structure which is identifiable in the image, acquiring an image of the vehicle interior using the camera, identifying at least one feature in the image corresponding to one of the physical structures, and selecting a set of pixel coordinates of the feature, each pixel coordinate associated with a specific point in the 3D model, forming 2D projections of the specific points onto the camera image plane by applying the coordinate transform and a model of camera optics, and calibrating the CT based on a relationship between said set of selected pixel coordinates and said 2D projections.

The 3D model may include geometrical data (e.g. CAD data) of the vehicle, which provides an exact description of all mechanical structures. The features to be identified may then be defined (configured) by specifying their 3D description of the corresponding structure in the CAD data. This ensures more robust identification and tracking, more independent of specific vehicle interior conditions, such as colors, surface properties, etc.

It is noted that the 2D projections are not necessarily explicitly determined, but may occur implicitly during the calibration. For example, the calibration step may include creating a set of equations, where each equation defines one element of an error vector as a difference between one of said pixel coordinates and an associated 2D projection, and minimizing the error vector, e.g. in the least square sense. The set of equations may be solved numerically. The equations may be non-linear.

The number of equations in the set is determined by the number of features that are identified in the image and mapped onto corresponding features in the projected 3D model. The selected features should be stationary (i.e. not movable) physical structures in the vehicle which are reliably identifiable in the image and also easily extractable from the projected 3D model. Examples of such features include shape and size of a B-pillar or a C-pillar, a door handle, center console, portions of the rear seat, etc.

The coordinate transform, CT, may be expressed as a series of nested transforms, each transform being associated with one or more physical degree of freedom of the camera. For example, when the camera is mounted on a steering wheel column, and the nested transforms may include a first transform representing the (typically known) pivoting point of the column, a second transform representing rotation (pitch) of the column and a third transform representing translation (expansion) of the column. If a camera is mounted on a pivoting point, e.g. on the rear view mirror, a transform with three rotational degrees of freedom would model such a joint.

The calibration is not restricted to cameras mounted on the steering column. Indeed, the CCS (and the transform CT) can generally be described and calibrated in six degrees of freedom (orientation and location).

According to a second aspect of the invention, the above object is achieved by system for calibrating a coordinate transform, CT, between a reference coordinate system and a camera coordinate system wherein the reference coordinate system relates to a vehicle interior, comprising a camera mounted in the vehicle interior and a controller for controlling the camera to acquire an image of the vehicle interior. The system further comprises a processing circuitry configured to obtain a 3D model of the vehicle interior, the 3D model including at least one physical structure which is identifiable in the image, identify at least one feature in the image corresponding to one of said physical structures, and selecting a set of pixel coordinates of said feature, each pixel coordinate associated with a specific point in the 3D model, form 2D projections of the specific points onto the camera image plane by applying said coordinate transform, CT, and a model of camera optics, and calibrate the coordinate transform, CT, based on a relationship between the set of selected pixel coordinates and the 2D projections.

### Brief description of the drawings

The present invention will be described in more detail with reference to the appended drawings, showing currently preferred embodiments of the invention.
Figure 1 schematically shows an eye-tracking system mounted on the dashboard of a vehicle.
Figure 2 shows the eye-tracking system in figure 1 in more detail.
Figure 3 is a flow chart of a method according to an embodiment of the invention.
Figure 4 illustrates three nested transforms representing a model of a steering wheel column.
Figure 5a-b illustrate the calibration process according to an embodiment of the present invention.

### Detailed description of preferred embodiments

Embodiments of the present invention will now be discussed with reference to an eye tracking system. However, the principles of the invention are equally useful to any application where a camera is mounted in a vehicle cabin, e.g. any driver monitoring systems (DMS) or cabin monitoring systems (CMS).

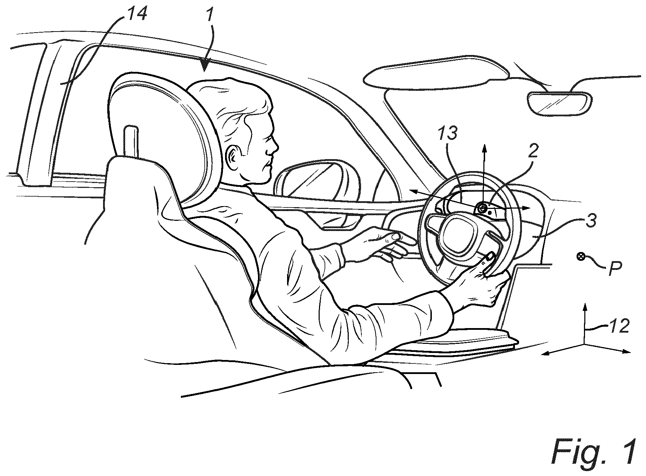

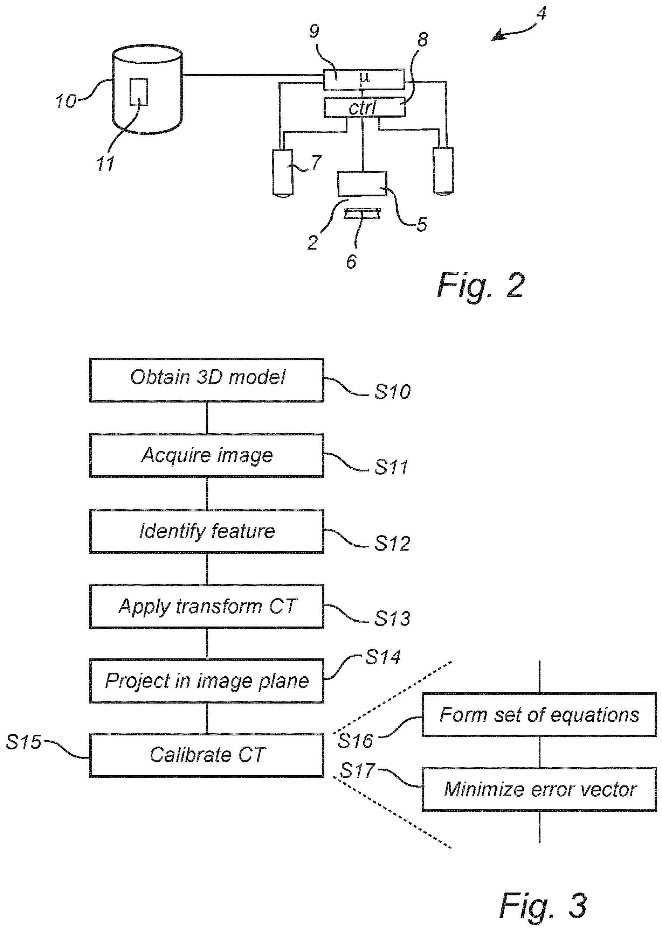

Figure 1 shows a driver 1 of vehicle. A camera 2 is mounted in front of the driver 1, here on the steering wheel column 3. Alternatively, the camera 2 may be mounted on the dashboard, be fixed to the ceiling, or have any other location which is appropriate for the specific application. The camera forms part of an imaging system 4 (see figure 2) used to acquire images of the driver and/or vehicle interior. For example, the system 4 may be a driver monitoring system (DMS).

With reference to figure 2, the components of the imaging system 4 is shown in more detail. The camera 2 here includes an image sensor 5, e.g. a CMOS image sensor, and suitable optics 6. The optics is configured to project incident light onto the image plane of the sensor 5. In the illustrated case, the system further includes at least one light source 7 with a known geometric relationship to the sensor 5. The light source(s) 7 is/are typically configured to emit light outside the visible range such as infra-red (IR) or near infra-red (NIR). The light source may be a solid-state light source, such as a LED. In the illustrated example, the light sources 7 are LEDs configured to emit light with a light spectrum concentrated in a 50 nm band centered around 850 or 940 nm (NIR). Further, an optical band-pass filter, e.g. an interference filter, may be arranged between the user and the sensor 5. The filter (not shown) is configured to have a pass-band substantially corresponding to the light emission spectrum of the light sources 7. So, in the above-mentioned example, the filter 6 should have a pass-band centered around 850 nm or 940 nm, e.g. 825 - 875 nm or 915 - 965 nm.

A controller 8 is connected to the camera 2 and LEDs 7, and programmed to control the sensor 5 to acquire consecutive images under illumination by the LEDs 7. Typically, the LEDs 7 are driven with a given duty cycle, and the controller 8 then controls the sensor 5 to acquire images in synchronization with the light pulses from the LEDs 7.

The system further comprises processing circuitry 9 (also referred to as a processor) and a memory 10. The memory stores program code executable by the processor 9, enabling the processor to receive and process images acquired by the sensor 5. The processor 9 may be configured to determine and track the pose of the eyes to determine the direction of gaze of the user, i.e. where the user is looking. The system in figure 1 has many different applications, including automotive applications where the eyes of a driver are tracked e.g. for safety reasons, as well as various man-machine interfaces.

During operation of an eye-tracking implementation, the user 1 is illuminated by the light source 7, and light reflected from the object (face of the user) passes the camera optics 6 and is received by the imaging sensor 5. It is noted that most ambient light will be blocked by the filter, thereby reducing the required power of the light source.

The direction of gaze may be determined by determining a head pose (location and orientation of the head in a reference coordinate system, RCS) and then an eye pose (location and orientation of the eye in relation to the head). In a simple case, sometimes referred to as *estimated* eye tracking, the eye pose is determined based on the position of the iris with respect to the head. However, in many applications, a more precise eye gaze detection is obtained by using the light sources 7. With illumination of a light source, the acquired images will include a reflection (glint) in the cornea of the eye, which can be used to make the eye gaze determination more exact.

In the illustrated embodiment, a 3D model 11 of the vehicle interior, e.g. a CAD model, is stored in memory 10. The 3D model 11 contains geometric data of the vehicle interior, expressed in a reference coordinate system RCS.

The position of the camera 2 may also be expressed in the reference coordinate system, and this position is referred to as the camera coordinate system, CCS. With knowledge of a coordinate transform CT between the RCS and the CCS, any point in the 3D model may be mapped into the camera coordinate system by applying the coordinate transform. Using knowledge of the camera optics, any point in the camera coordinate system may then be projected onto the image plane of the camera.

In figure 1, the reference coordinate system, RCS, is indicated by 12, while the camera coordinate system, CCS, is indicated by 13.

The operation of the system will now be discussed with reference to figures 3 - 5. The steps in figure 3 may be performed by the processing circuitry 9.

In a first initialization step S10, the 3D model 11 of the vehicle interior is obtained and stored in memory 10. In an implementation where the camera is mounted on a pivotable steering wheel column 3, the model may include the position of the pivoting point P.

The calibration process starts in step S11 by acquiring an image 20 of the vehicle interior using the camera 1. In step S12, at least one geometric feature 21 is identified in the image 20 using suitable image processing. Each feature corresponds to a fixed physical structure in the vehicle interior, present in the 3D model. Suitable structures may be for example a B-pillar 14 (see figure 1) or a C-pillar, a door handle, or any other non-movable physical structure which may readily be identified in an image of the vehicle interior. It is noted that movable structures, e.g. the back of the front seat, are less suitable to use for a calibration process. After the features 21 have been identified, a set of pixel coordinates 22 of each identified feature 21 are selected. Each selected pixel coordinate 22 corresponds to a specific point in the 3D model.

The identification of features in the image can be achieved with conventional template tracking, which however requires creation of templates using an actual image from the vehicle interior. A more sophisticated approach is to use a neural network system which has been trained to identify a set of features in the image (landmark detection). The neural network system could be trained on many different vehicle interiors, making it robust against vehicle variation (e.g. color, shape, etc). A feature detector using such a trained neural network could also provide an internal confidence signal representing how similar this detected feature is to what it was trained to identify. A low confidence signal may indicate that a particular feature has not been correctly identified, e.g. because it is not visible (occluded feature). As an alternative approach, the neural network could be trained to perform pixel segmentation, and extract boundaries between stable segments.

In step S13, a current (or initial) approximation of the transform CT is applied to the specific points of the 3D model, to map these points onto the camera coordinate system. A mathematical model of the camera optics 6 is then used in step S14 to form 2D projections 23 of the specific points onto the image plane of the camera 2. Each 2D projection 23 of a specific point will thus be a mathematical expression obtained by applying the transform CT and a model of the camera optics to the selected points of the 3D model data.

In step S15 the CT is calibrated (updated) based on a relationship between the selected pixels coordinates 22 and the corresponding 2D projections 23.

Step S15 may be performed as one computational operation by the processing circuitry. However, in order to understand the principle, step S15 has here been divided into sub-steps S16-S17.

In step S16, a set of equations is formed, where each equation defines one element of an error vector as a difference between 1) one of the pixel coordinates identified in the image, and 2) the 2D projection of the point in the 3D point model data associated with this pixel coordinate. The equations will further include a calibration vector, including one variable for each degree of freedom.

In step S17, the error vector is minimized, e.g. in the least square sense, thereby providing a calibration of the coordinate transform.

As just explained, the solution to the minimization problem has six variables, one for each degree of freedom (three position and three rotation). However, the process can be made more effective and robust by modelling the actual degrees of freedom of the camera as separate transforms with limited degrees of freedom.

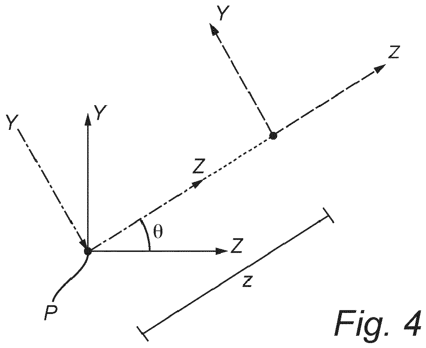

In the present example, where the camera 2 is mounted on the steering wheel column 3, the coordinate transform in principle only has two degrees of freedom; 1) rotation in the vertical plane (pitch, Φ), and 2) expansion/retraction (z). This is shown in figure 4. As mentioned, the pivoting point P of the steering wheel column can be assumed to be a known point (known coordinates) in the 3D model data.

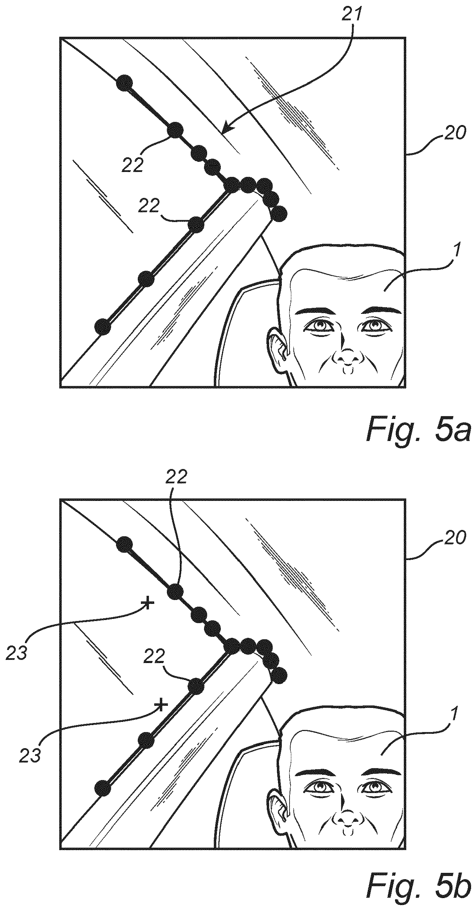

Graphically, the process of determining the CCS can be illustrated as a two-stage process, as outlined in figure 5a-b. Figure 5a illustrates an edge 21 of the B-pillar 14 identified in an image 20, and a set of pixel coordinates 22 along the edge 21. These pixel coordinates thus correspond to specific points in the 3D model 11. Figure 5b shows 2D projections 23 of two of these specific points in the image plane. As the coordinate transform CT at this time is not calibrated, the 2D projections 23 do not correctly align with the corresponding pixel coordinates 22.

For illustrative purposes, the calibration of the CT can be regarded as an adjustment of the camera coordinate system CCS, as shown in figure 4. During the calibration, the CCS will be rotated in the vertical plane to minimize the error as far as possible. This will align the pixel coordinates 22 and the projections 23 in the plane. Also, the CCS will be translated in the z-direction, to minimize the error even further.

In practice, the process of calibrating the CT will typically be done in one single computational process. In the case of a camera mounted on the steering wheel column, the process can be expressed as a minimization problem with two variables min f(Φ, z), where the function f involves a first (known) transform of the steering wheel column pivoting point P, and two additional geometrical transforms. The second transform describes a rotation around the pivoting point, while the third transform describes translation along the z-axis. The solution to this problem will provide the pitch and translation z.

In order to cope with tolerances in the camera mounting, a limited calibration also in other degrees of freedom may be permitted. By introducing these additional DOFs in the second transform, the minimization problem can be expressed as min f(pitch, 6 DOF).

In a calibration process, the most recent calibration will be used as starting point for each consecutive iteration. In the example given above, the CT will include three nested transforms (pivot point, rotation and translation). The pivot point transform will remain unchanged, while the second and third transforms will be calibrated in each iteration.

In another example, where the camera is mounted on a rear-view mirror, the CT will include a first transform representing the pivoting point of the mirror, and at least one transform representing rotation around the pivoting point. If appropriate, there may be one separate transform for each rotational degree of freedom.

The person skilled in the art realizes that the present invention by no means is limited to the embodiments described above. On the contrary, many modifications and variations are possible within the scope of the appended claims. For example, the system may include more than one camera to be calibrated.

## Claims

1. A method for calibrating a coordinate transform, CT, between a reference coordinate system (12) and a camera coordinate system (13) wherein the reference coordinate system relates to a vehicle interior in which the camera (2) is mounted, comprising:
obtaining a 3D model of the vehicle interior, said 3D model including at least one physical structure which is identifiable in an image;
acquiring an image (20) of the vehicle interior using the camera (2);
identifying at least one feature (21) in said image (20) corresponding to one of said physical structures (14), and selecting a set of pixel coordinates (22) of said feature, each pixel coordinate associated with a specific point in the 3D model;
forming 2D projections (23) of the specific points onto the camera image plane by applying said coordinate transform and a model of camera optics (6); and
calibrating the CT based on a relationship between said set of selected pixel coordinates (22) and said 2D projections (23).

2. The method according to claim 1, wherein the step of calibrating includes:
creating a set of equations, where each equation defines one element of an error vector as a difference between one of said pixel coordinates and an associated 2D projection, and
minimizing said error vector, e.g. in the least square sense.

3. The method according to claim 1 or 2, wherein the coordinate transform is expressed as a series of nested transforms, each transform being associated with at least one physical degree of freedom of the camera.

4. The method according to claim 3, wherein the camera is mounted on a steering wheel column, and wherein said series of nested transforms include a first transform representing the pivoting point of the column, a second transform representing rotation (pitch) of the column and a third transform representing translation (expansion) of the column.

5. The method according to claim 3, wherein the camera is mounted on a rear-view mirror, and wherein said series of nested transforms include a first transform representing the pivoting point of the mirror, and at least one second transform representing rotation around the pivoting point.

6. The method according to claim 5, wherein said at least one second transform include a separate transform for each rotational degree of freedom.

7. The method according to any one of the preceding claims, wherein the at least one physical structure includes at least one of a B-pillar, a C-pillar, a center console, a portion of the rear seat, and a door handle.

8. A system for calibrating a coordinate transform, CT, between a reference coordinate system (12) and a camera coordinate system (13) wherein the reference coordinate system relates to a vehicle interior, comprising:
a camera (2) mounted in the vehicle interior,
a controller (8) for controlling the camera (2) to acquire an image (20) of the vehicle interior, and
processing circuitry (9) configured to:
obtain a 3D model of the vehicle interior, said 3D model including at least one physical structure which is identifiable in said image (20);
identify at least one feature (21) in said image (20) corresponding to one of said identifiable physical structures, and selecting a set of pixel coordinates (22) of said feature, each pixel coordinate associated with a specific point in the 3D model;
form 2D projections (23) of the specific points onto the camera image plane by applying said coordinate transform, CT, and a model of camera optics (6); and
calibrate the coordinate transform, CT, based on a relationship between said set of selected pixel coordinates (22) and the 2D projections (23).

9. The system according to claim 8, wherein the processing circuitry is configured to calibrate the coordinate transform by:
creating a set of equations, where each equation defines one element of an error vector as a difference between one of said pixel coordinates and an associated 2D projection, and
minimizing said error vector, e.g. in the least square sense, thereby .

10. The system according to one of claims 8 or 9, wherein the coordinate transform is expressed as a series of nested transforms, each transform being associated with at least one physical degree of freedom of the camera.

11. The system according to claim 10, wherein the camera is mounted on a steering wheel column, and wherein said series of nested transforms include a first transform representing the pivoting point of the column, a second transform representing rotation (pitch) of the column and a third transform representing translation (expansion) of the column.

12. The method according to claim 10, wherein the camera is mounted on a rear-view mirror, and wherein said series of nested transforms include a first transform representing the pivoting point of the mirror, and at least one second transform representing rotation around the pivoting point.

13. The method according to claim 12, wherein said at least one second transform include a separate transform for each rotational degree of freedom.

14. The system according to any one of claims 7 - 13, wherein the at least one physical structure includes at least one of a B-pillar, a C-pillar a center console, a portion of the rear seat, and a door handle.
